# EUROPÄISCHE PATENTSCHRIFT

(11) **EP 3 003 673 B1**
(45) Veröffentlichungstag und Bekanntmachung des Hinweises auf die Patenterteilung: **13.05.2020**
(21) Anmeldenummer: 14731173.2
(22) Anmeldetag: 04.06.2014
(51) Int. Cl.: B29L 23/00, B29C 44/34, B29B 7/74, B29C 48/30, B29C 48/09, B29C 48/335, B29C 48/70, B29C 48/00, B29C 49/04

(54) **EXTRUSIONSSCHLAUCHKOPF FÜR DISKONTINUIERLICHES SCHÄUMEN**
EXTRUSION PARISON HEAD FOR DISCONTINUOUS FOAMING
TÊTE DE TUBE D'EXTRUSION POUR LE MOUSSAGE DISCONTINU

(30) Priorität: 04.06.2013 DE 102013105749
(43) Veröffentlichungstag der Anmeldung: 13.04.2016
(73) Patentinhaber: W. Müller GmbH, 53842 Troisdorf (DE)
(72) Erfinder: KNIPP, Guido, 53787 Lohmar (DE)
(74) Vertreter: Neumann Müller Oberwalleney & Partner Patentanwälte
(86) Internationale Anmeldenummer: PCT/EP2014/061533
(87) Internationale Veröffentlichungsnummer: WO 2014/195337

(56) Entgegenhaltungen:
- EP-A2- 0 323 089
- EP-A2- 0 463 759
- DE-A1- 4 316 863
- US-A- 3 687 582
- US-A- 4 548 776
- US-A- 4 783 299

## Beschreibung

Die Erfindung betrifft einen Extrusionskopf zur Herstellung von schlauch- oder rohrförmigen Vorformlingen aus extrudierbarem Kunststoff, die aus mindestens einer ersten Schicht und einer zweiten Schicht aufgebaut sind, insbesondere für die Blasformtechnik, wobei der Extrusionskopf einen ersten Verteiler mit einem Anschluss für einen ersten Extruder und einen zweiten Verteiler mit einem Anschluss für einen zweiten Extruder aufweist. In dem Extrusionskopf ist ferner ein erster Fließkanal mit einer ringförmigen ersten Austrittsöffnung zur Erzeugung der ersten Schicht angeordnet, wobei der erste Fließkanal vom ersten Verteiler gespeist wird. Ein zweiter Fließkanal mit einer ringförmigen zweiten Austrittsöffnung zur Erzeugung der zweiten Schicht wird vom zweiten Verteiler gespeist. Die Erfindung betrifft ferner eine Extrusionsanlage mit einem solchen Extrusionskopf und ein Verfahren zum Betreiben eines solchen Extrusionskopfes.

Die Blasformtechnik, insbesondere das Extrusionsblasformen, dient zur Herstellung von Hohlkörpern aus thermoplastischen Kunststoffen, wie zum Beispiel Behältern bzw. Behältnissen jeglicher Art. Hierbei wird ein schlauch- oder rohrförmiger Vorformling durch Extrusion erzeugt, der im Anschluss an das Extrudieren in einer Blasform durch Einbringen eines Innendrucks an die Innenkontur der Blasform angepasst wird. Nach Erstarren des Extrudats kann die Blasform geöffnet werden und das Endprodukt entnommen werden. Für die Extrusion wird mindestens ein Extruder vorgesehen, in dem der thermoplastische Kunststoff plastifiziert wird. Das damit erzeugte Extrudat wird dem Extrusionskopf zugeführt, in dem es zu einem schlauchförmigen Vorformling geformt wird. Im vorliegenden Fall sind mindestens zwei Schichten vorgesehen, um einen mehrschichtigen Vorformling herzustellen. Grundsätzlich sind auch mehr als zwei Schichten möglich.

Solche Schlauchköpfe sind in vielfältiger Weise bekannt. So zeigt zum Beispiel die EP 0 770 469 B1 einen Schlauchkopf der eingangs genannten Art zur Herstellung eines Vorformlings mit einer Vielzahl von Schichten, wobei der Extrusionskopf einfach an die unterschiedlichen Bedürfnisse und an unterschiedliche Schichtzahlen angepasst werden kann.

US 4 783 299 A zeigt einen weiteren Schlauchkopf zur Herstellung eines mehrlagigen extrudierten Schlauchs, wobei zwei äußere Fließkanäle von einem ersten Extruder gespeist werden und ein mittlerer Fließkanal von einem zweiten Extruder gespeist wird.

Aus der DE 26 23 308 C3 ist ein Extrusionskopf zum diskontinuierlichen Herstellen von Formteilen aus thermoplastischem Kunststoff mit einer geschlossenen Außenhaut aus kompaktem Kunststoff und einem porigen Kern aus geschäumtem Kunststoff bekannt. Hierbei ist der Extrusionskopf mit einem Extruder verbunden, der den Extrusionskopf mit plastifiziertem Kunststoff beschickt. Innerhalb des Extrusionskopfes wird der Strom des Extrudats in verschiedene Fließkanäle aufgeteilt, die zur Erzeugung unterschiedlicher Schichten dienen. In einem der Fließkanäle wird ein Treibgas in das Extrudat eingebracht, um eine der Schichten aufzuschäumen.

Aus der DE 2 241 002 A ist ein Extrusionskopf zum Spritzgießen von Kunststoffteilen mit glatter Oberfläche und porigem Kern bekannt. Innerhalb eines ersten Extruders wird thermoplastischer Kunststoff mit einem Treibmittel versehen und dem Extrusionskopf zugeführt. Mittels eines zweiten Extruders wird ein thermoplastischer Kunststoff dem Extrusionskopf zugeführt, wobei das thermoplastische Material nicht aufgeschäumt ist. Die beiden Extrusionsströme aus den beiden Extrudern dienen zum Erzeugen von zwei unterschiedlichen Schichten, die in eine Spritzgießform eingebracht werden. Hierbei werden die beiden Extrusionsströme derart in die Spritzgussform eingebracht, dass ein Bauteil mit einer glatten Außenfläche und einem porigen Kern entsteht.

US 4 548 776 zeigt einen Extrusionskopf, der über eine Leitung mit einem Extruder und einem Speicher verbunden ist. Zwischen der Leitung und einer Düse des Extrusionskopfs ist ein Mischteil vorgesehen, in dem über eine weitere Leitung ein Treibmittel, zum Beispiel ein Gas, dem Extrudat zugeführt wird. Innerhalb des Mischteils ist ein dynamischer Mischer vorgesehen, der radial vorstehende Mischblätter aufweist und drehbar angeordnet ist. Der Mischer dient zum Durchmischen des Extrudats mit dem Treibmittel.

EP 0 463 759 A2 zeigt einen Extruder mit einer Mischereinheit zum Ausstoßen eines aufgeschäumten Extrudats. Hierzu ist die Mischereinheit zwischen einer Extruderschnecke und einer Düse des Extruders angeordnet. Aus der Düse wird das aufgeschäumte Extrudat als Strang ausgestoßen.

US 3 687 582 A zeigt eine Mischereinheit zum Zuführen eines Schaummaterials zu einem Formwerkzeug, das zwischen einem Extruder und dem Formwerkzeug angeordnet ist. Ein statischer Mischer weist eine Vielzahl von über den Umfang verteilten Bohrungen auf, durch die das Extrudat geleitet wird und innerhalb derer Treibgas in das Extrudat eingebracht wird.

Aufgabe der vorliegenden Erfindung ist es, einen Extrusionskopf und ein Verfahren zum Betreiben des Extrusionskopfes bereitzustellen, wobei Vorformlinge, insbesondere für die Blasformtechnik, hergestellt werden können, welche eine aufgeschäumte Schicht aufweisen. Hierbei sollen herkömmliche Extruder verwendbar sein, so dass zum Herstellen der Vorformlinge mit einer aufgeschäumten Schicht keine Anpassung der Extruder zu erfolgen hat.

Die Aufgabe wird erfindungsgemäß durch einen Extrusionskopf zur Herstellung von schlauchförmigen Vorformlingen aus extrudierbarem Kunststoff, die aus mindestens einer ersten Schicht und einer zweiten Schicht aufgebaut sind, gelöst, wobei der Extrusionskopf folgendes umfasst:
einen ersten Verteiler mit einem Anschluss für einen ersten Extruder,
einen zweiten Verteiler mit einem Anschluss für einen zweiten Extruder,
einen ersten Fließkanal mit einer ringförmigen ersten Austrittsöffnung zur Erzeugung der ersten Schicht, wobei der erste Fließkanal vom ersten Verteiler gespeist wird, einen zweiten Fließkanal mit einer ringförmigen zweiten Austrittsöffnung zur Erzeugung der zweiten Schicht, wobei der zweite Fließkanal vom zweiten Verteiler gespeist wird,
einen Mischer innerhalb des zweiten Fließkanals mit einem Anschluss zum Einleiten eines Treibgases, wobei der Mischer ein Mischergehäuses mit einer Bohrung, innerhalb derer ein Mischelement drehbar angeordnet ist, aufweist, und wobei zwischen der Bohrung des Mischergehäuses und dem Mischelement ein ringförmiger Kanalabschnitt gebildet ist, der Teil des zweiten Fließkanals ist, und
stromab vom Mischer einen bohrungsförmigen Kanalabschnitt des zweiten Fließkanals, wobei der Materialfluss aus dem ringförmigen Kanalabschnitt des Mischers in dem bohrungsförmigen Kanalabschnitt zusammengeführt wird.

Von Vorteil ist hierbei, dass für jede Schicht ein Verteiler vorgesehen ist, der mit einem separaten Extruder verbindbar ist. Somit kann für jede Schicht ein anderes Material verwendet werden. Ferner ist innerhalb des Extrusionskopfes ein Mischer vorgesehen, in welchem Treibgas in das Extrudat des zweiten Fließkanals eingebracht wird und vermischt wird. Somit muss keiner der Extruder speziell angepasst werden, um ein Aufschäumen des Extrudats zu gewährleisten. Es können daher handelsübliche Extruder verwendet werden, die gegebenenfalls auch bei einem Betreiber der Blasformanlage bereits vorhanden sind. Ein Umstellen auf die Herstellung von Vorformlingen mit einer aufgeschäumten Schicht kann daher ausschließlich durch Tausch des Extrusionskopfes erfolgen.

Dadurch, dass es sich bei dem Mischer um einen dynamischen Mischer handelt, kann ein Durchmischen des Extrudats mit dem Treibgas besonders effizient vollzogen werden. Der Mischer weist hierbei ein, vorzugsweise um eine Längsachse des Extrusionskopfes, drehend antreibbaren, insbesondere wellenförmiges, Mischelement auf, das innerhalb einer Bohrung eines Mischgehäuses angeordnet ist. Zwischen der Bohrung des Mischgehäuses und dem Mischelement ist ringförmiger Kanalabschnitt gebildet, der Teil des zweiten Fließkanals ist.

Stromab vom Mischer ist der bohrungsförmige Kanalabschnitt des zweiten Fließkanals vorgesehen, wobei der Materialfluss aus dem Ringkanal des Mischers in dem bohrungsförmigen Kanalabschnitt zusammengeführt wird. Dies trägt zur Homogenisierung des Materialflusses des Extrudats bei. Zunächst wird innerhalb des Mischers auf einem verhältnismäßig großen Umfang das Extrudat mit dem Treibgas über die Mischblätter gemischt, wobei ein möglichst großer Umfang für hohe Umfangsgeschwindigkeiten der Mischblätter sorgt und somit ein gründliches Durchmischen fördert. Der schlauchförmige Materialfluss bzw. ringförmige Kanalabschnitt wird dann zusammengeführt in einem bohrungsförmigen Kanalabschnitt, in dem das Material aus dem Mischer nochmals homogenisiert wird und anschließend wieder in einem Ringkanal schlauchförmig weitergeführt wird.

Vorzugsweise sind an einer Außenumfangsfläche des Mischelements Mischblätter angeordnet. An einer Innenumfangsfläche der Bohrung des Mischergehäuses können Mischblätter vorgesehen sein, die mit den Mischblättern des Mischelements zusammenwirken, um ein möglichst effizientes Durchmischen des Extrudats mit dem Treibgas zu gewährleisten.

Am Mischergehäuse kann ein Anschluss zum Einleiten eines Treibgases vorgesehen sein, wobei eine Treibgasleitung in den ringförmigen Kanal führt. Der Anschluss zum Einleiten des Treibgases befindet sich hierbei vorzugsweise an einem stromaufwärtigen Ende des Mischergehäuses, so dass das Treibgas einen möglichst langen Weg durch den Mischer durchläuft. Hierdurch wird ein möglichst effizientes Mischen über möglichst die gesamte Länge des Mischers gewährleistet.

Vorzugsweise ist zum Antreiben des Mischers ein Servomotor mit variabler Drehzahl vorgesehen, somit kann das Mischergebnis und damit die Feinheit der Poren, die durch das Treibgas entstehen, einfach variiert werden.

Es hat sich gezeigt, dass es von Vorteil ist, wenn grundsätzlich ein definierter Druck innerhalb des Materialflusses für die aufgeschäumte Schicht, d.h. innerhalb des zweiten Fließkanals, aufrecht erhalten wird. Hierzu kann vorgesehen sein, dass die Querschnittsfläche des zweiten Fließkanals vom Mischer in Richtung zur zweiten Austrittsöffnung kontinuierlich geringer wird. Aufgrund der geringen Viskosität des Extrudats baut sich beim Einpressen des Extrudats in den Extrusionskopf stromaufwärts ein höherer Druck auf als stromabwärts, wenn grundsätzlich die Querschnittsfläche eines Fließkanals konstant bleibt. Um auch stromabwärts innerhalb des Extrusionskopfes einen ausreichenden Druck zu gewährleisten, wird die Querschnittsfläche zur Austrittsöffnung hin kontinuierlich geringer. Damit wird vermieden, dass das Treibgas bereits innerhalb des Extrusionskopfes zu großen Poren führt. Es wird vielmehr gewährleistet, dass ein Ausdehnen der Poren und damit das eigentliche Aufschäumen insbesondere nach Austritt des Extrudats aus dem Extrusionskopf stattfindet.

Beim Einsatz des Extrusionskopfes in der Blasformtechnik muss ein diskontinuierliches Extrudieren der schlauchförmigen Vorformlinge gewährleistet werden, da nach Abschluss der Extrusion des Vorformlings dieser in einer Blasform aufgeblasen wird. Während es Blasvorgangs darf kein weiteres Extrudat aus dem Extrusionskopf austreten. Daher wird in der Regel ein Speicherkopf oder ein separater Zwischenspeicher vorgesehen. Somit können die Extruder kontinuierlich thermoplastischen Kunststoff fördern, wobei während des Blasvorgangs der Extruder das Extrudat in den Zwischenspeicher fördert, aus dem das Extrudat nach Beendigung des Blasvorgangs wieder dem Extrusionskopf zugeführt werden kann. Um während des Blasvorgangs einen Druckabfall innerhalb des Extrusionskopfes für die zweite Schicht zu vermeiden, kann stromaufwärts vom Mischer ein Absperrventil vorgesehen sein, so dass der Druck innerhalb der zweiten Schicht konstant gehalten wird. Hierzu ist ebenfalls, wie üblich bekannt, die zweite Austrittsöffnung verschließbar.

Grundsätzlich kann die zweite Austrittsöffnung stromab von der ersten Austrittsöffnung angeordnet sein. Die zweite Austrittsöffnung kann derart angeordnet sein, dass die zweite Schicht innerhalb der ersten Schicht angeordnet ist. Somit wird eine erste äußere glatte Schicht gewährleistet, wobei die zweite Schicht im inneren der ersten Schicht angeordnet ist.

Der Extrusionskopf kann ferner einen dritten Verteiler mit einem Anschluss für einen dritten Extruder aufweisen. Ein dritter Fließkanal ist dann mit einer ringförmigen dritten Austrittsöffnung zur Erzeugung einer dritten Schicht vorgesehen, wobei der dritte Fließkanal vom dritten Verteiler gespeist wird. Somit kann ein dreischichtiger Vorformling hergestellt werden. Prinzipiell sind auch weitere Verteiler und weitere Fließkanäle zur Erzeugung weiterer Schichten denkbar.

Hierbei kann die dritte Austrittsöffnung derart ausgebildet sein, dass die dritte Schicht innerhalb der zweiten Schicht angeordnet ist. Somit ergibt sich ein Vorformling mit einer glatten Außenschicht, einer glatten Innenschicht und einer dazwischen angeordneten aufgeschäumten Schicht.

Bei einer ersten Ausführungsform kann vorgesehen sein, dass die zweite Austrittsöffnung stromab der dritten Austrittsöffnung angeordnet ist. Hierbei werden stromab der dritten Austrittsöffnung der zweite Fließkanal und der dritte Fließkanal zusammengeführt, so dass die zweiter Schicht und die dritte Schicht gemeinsam aus der zweiten Austrittsöffnung austreten.

Bei einer zweiten Ausführungsform kann vorgesehen sein, dass die erste Austrittsöffnung stromab der zweiten Austrittsöffnung und der dritten Austrittsöffnung angeordnet ist. Stromab der zweiten Austrittsöffnung werden der erste Fließkanal und der dritte Fließkanal zusammengeführt, wobei die zweite Austrittsöffnung verschließbar ist. Bei geöffneter zweiter Austrittsöffnung werden alle Fließkanäle zusammengeführt. Bei geschlossener zweiter Austrittsöffnung treten somit die erste Schicht und die dritte Schicht gemeinsam aus der ersten Austrittsöffnung aus. Bei geöffneter zweiter Austrittsöffnung treten die erste Schicht, die zweite Schicht und die dritte Schicht gemeinsam aus der ersten Austrittsöffnung aus.

Die Aufgabe wird ferner durch eine Extrusionsanlage mit einem Extrusionskopf wie oben beschrieben gelöst, wobei jedem Verteiler ein Zwischenspeicher für Extrudat zugeordnet ist.

Darüber hinaus wird die Aufgabe durch ein Verfahren zum Betreiben eines Extrusionskopfes oder einer Extrusionsanlage, wie vorher beschrieben, gelöst, bei dem bei Unterschreiten eines vorbestimmten Drucks innerhalb des zweiten Fließkanals der Druck durch Anpassen der Ausstoßgeschwindigkeit eines dem Extrusionskopf vorgeschalteten zweiten Zwischenspeichers für Extrudat derart reguliert wird, dass der Druck innerhalb des zweiten Fließkanals auf einem definierten Wert gehalten wird.

Vorzugsweise wird bei Unterschreiten des Drucks innerhalb des zweiten Fließkanals der Druck zum Anpassen der Ausstoßgeschwindigkeit eines dem Extrusionskopf vorgeschalteten zweiten Zwischenspeichers für Extrudat reguliert. Somit kann mittels der Regulierung der Ausstoßgeschwindigkeit der Druck innerhalb des zweiten Fließkanals gesteuert werden.

Weiterhin kann vorgesehen sein, dass die Temperatur innerhalb des zweiten Fließkanals auf einen anderen Wert eingestellt wird als innerhalb der übrigen Fließkanäle. Dies ist insbesondere dann von Bedeutung, wenn sich durch das Einbringen des Treibgases die Viskosität der zweiten Schicht von den Viskositäten der übrigen Schichten unterscheidet. Durch Regulierung der Temperatur kann gewährleistet sein, dass die Viskosität der zweiten Schicht an die Viskosität der übrigen Schichten angeglichen wird.

Ein bevorzugtes Ausführungsbeispiel wird im Folgenden anhand der Figuren näher erläutert. Hierin zeigt:
- Figur 1: eine perspektivische Darstellung einer Extrusionsanlage,
- Figur 2: einen Längsschnitt durch den Extrusionskopf der Extrusionsanlage gemäß Figur 1 in einer ersten Ausführungsform und
- Figur 3: einen Teil-Längsschnitt durch den Extrusionskopf der Extrusionsanlage gemäß Figur 1 in einer zweiten Ausführungsform.

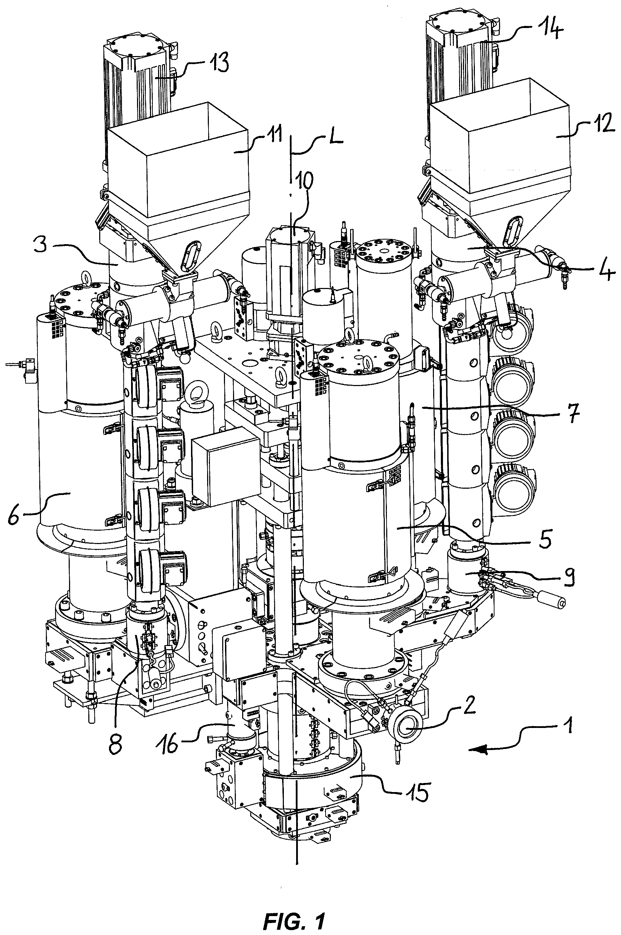

Figur 1 zeigt eine perspektivische Darstellung einer Extrusionsanlage mit einem erfindungsgemäßen Extrusionskopf 1. Der Extrusionskopf 1 weist einen Anschluss 2 für einen hier nicht dargestellten ersten Extruder, meist ein bereits beim Betreiber der Anlage vorhandener Maschinenextruder, auf. Der erste Extruder dient zur Bildung einer ersten Schicht eines schlauchförmigen Vorformlings. Ferner ist ein zweiter Extruder 3 als Zusatzextruder vorgesehen, der zur Bildung einer zweiten Schicht dient. Darüber hinaus ist ein dritter Extruder 4 als Zusatzextruder vorgesehen, der zur Bildung einer dritten Schicht dient. Grundsätzlich können auch weitere Extruder vorgesehen sein. Wie später noch erläutert wird, ist der Extrusionskopf 1 derart ausgebildet, dass die erste Schicht die äußere Schicht ist, die zweite Schicht die mittlere Schicht und die dritte Schicht die innere Schicht ist, wobei die zweite Schicht aufgeschäumt wird.

Jedem Extruder 3, 4 ist ein Zwischenspeicher 5, 6, 7 zugeordnet. So ist in Fließrichtung des Extrudats aus dem ersten Extruder stromabwärts ein erster Zwischenspeicher 5 zugeordnet, dem zweiten Extruder 3 ein zweiter Zwischenspeicher 6 und dem dritten Extruder 4 ein dritter Zwischenspeicher 7. Die Zwischenspeicher 5, 6, 7 sind als Zylinderkolbeneinheiten gestaltet, so dass die jeweiligen Extruder zunächst Extrudat in den Zylinder des jeweiligen Zwischenspeichers extrudieren und von dort gelangt das Extrudat weiter über Fließkanäle zu dem Extrusionskopf 1. Somit ist ein diskontinuierliches Extrudieren des Vorformlings möglich. In der Blastechnik ist es erforderlich, dass zunächst ein Vorformling extrudiert wird. Hierzu wird das Extrudat kontinuierlich von den Extrudern gefördert, so dass ein Vorformling kontinuierlich aus dem Extrusionskopf 1 austritt. Sobald der Vorformling fertig geformt ist, muss dieser mittels einer hier nicht dargestellten Blasform aufgeblasen werden. Während des Blasvorgangs darf aus dem Extrusionskopf kein weiteres Extrudat austreten. Die Extruder 3, 4 müssen jedoch kontinuierlich weiter arbeiten. Das aus den Extrudern 3, 4 extrudierte Extrudat wird dann in die Zwischenspeicher 5, 6, 7 geleitet und in den Zylindern der Zwischenspeicher 5, 6, 7 gespeichert, wobei ein Kolben in der in Figur 1 dargestellten Orientierung der Extrusionsanlage nach oben fährt, so dass der Zylinderraum vergrößert wird. Sobald der Vorformling geblasen ist und aus der Blasform entfernt wurde, werden die Kolben der einzelnen Zwischenspeicher 5, 6, 7 wieder nach unten bewegt, so dass das Extrudat aus den Zwischenspeichern 5, 6, 7 dem Extrusionskopf zugeführt wird.

Der zweite Extruder 3 ist über einen Anschluss 8 mit dem Extrusionskopf 1 verbunden. Der dritte Extruder 4 ist über einen Anschluss 9 mit dem Extrusionskopf 1 verbunden. Der erste Extruder (hier nicht dargestellt) ist in der Regel horizontal angeordnet und mit dem Anschluss 2 verbunden. Der zweite Extruder 3 und der dritte Extruder 4 sind vertikal angeordnet und extrudieren vertikal nach unten. Hierbei weisen die Extruder Fülltrichter 11, 12 auf, in die der körnige thermoplastische Kunststoff eingefüllt werden kann. Zum Antreiben der Extruder 3, 4 dienen Antriebsmotoren 13, 14.

Innerhalb des Extrusionskopfes 1 wird der plastifizierte Kunststoff der zweiten Schicht, der von dem zweiten Extruder 3 extrudiert wird, mit einem Treibgas vermengt, wozu ein dynamischer Mischer dient, der nachfolgen näher erläutert wird. Zum Antreiben des dynamischen Mischers ist ein Servomotor 10 vorgesehen.

Grundsätzlich ist der Extrusionskopf 1 ebenfalls vertikal angeordnet, wobei das Extrudat vertikal nach unten ausgestoßen wird.

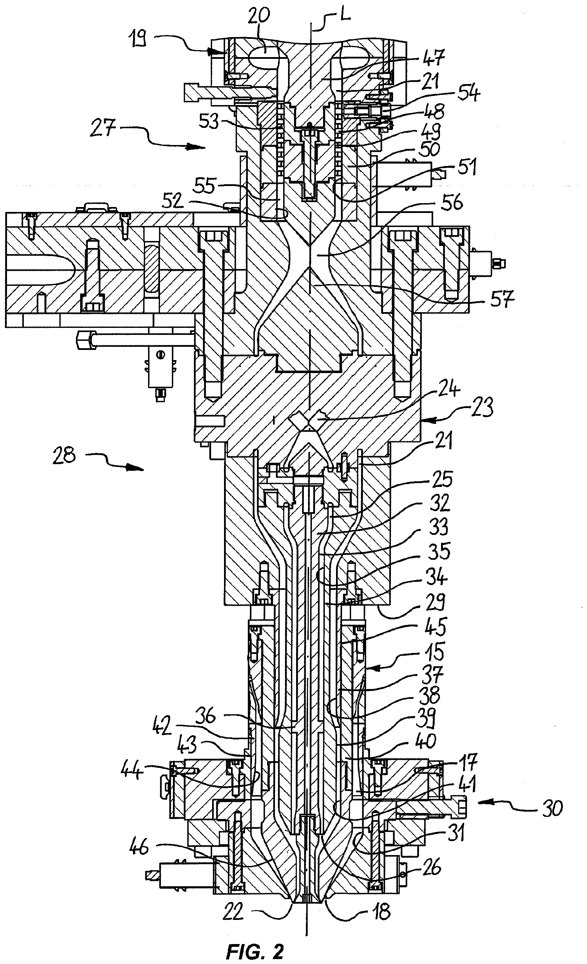

Die Figur 2 zeigt einen Längsschnitt einer ersten Ausführungsform des Extrusionskopfes 1 und wird im Folgenden zusammen mit Figur 1 beschrieben.

In einem unteren Bereich des Extrusionskopfes 1 weist dieser einen ersten Verteiler 15 auf, welcher mit dem nicht dargestellten ersten Extruder verbunden ist. Der erste Verteiler, der in bekannter Weise als Ringverteiler ausgebildet ist, ist über eine Zuleitung 16 mit dem ersten Extruder verbunden. Die erste Zuleitung 16 geht im weiteren Verlauf in einen ringförmigen ersten Fließkanal 17 über, der bis zu einer ersten Austrittsöffnung 18, die hier verschlossen dargestellt ist, über, so dass das Extrudat für die erste Schicht an der ersten Austrittsöffnung 18 aus dem Extrusionskopf 1 austritt. Die erste Austrittsöffnung 18 bildet somit eine erste Ringdüse.

In einem oberen Bereich des Extrusionskopfes 1 ist ein zweiter Verteiler 19 vorgesehen, der mit dem zweiten Extruder 3 verbunden ist, wobei eine zweite Zuleitung 20 zu einem ringförmigen zweiten Fließkanal 21 führt. Innerhalb des zweiten Fließkanals 21 ist ein Mischer 27 vorgesehen. Stromab vom Mischer 27 verläuft der zweite Fließkanal 21 vertikal nach unten bis zu einer zweiten Austrittsöffnung 22, die ebenfalls im verschlossenen Zustand dargestellt ist und eine zweite Ringdüse bildet, aus der das Extrudat der zweiten Schicht austritt.

Ferner ist ein dritter Verteiler 23 vorgesehen, der mit dem dritten Extruder 4 verbunden ist. Über eine dritte Zuleitung 24 wird das Extrudat des dritten Extruders 4 zu einem ringförmigen dritten Fließkanal 25 geleitet. Der dritte Fließkanal 25 endet an einer dritten Austrittsöffnung 26, welche sich innerhalb des Extrusionskopfes 1 befindet und in den zweiten Fließkanal 21 übergeht.

Der Extrusionskopf 1 weist einen Basisabschnitt 28 auf, der den zweiten Verteiler 19 für die zweite Schicht und den dritten Verteiler 23 für die dritte Schicht enthält. Der Basisabschnitt 28 ist im Wesentlichen länglich in Richtung einer vertikal orientierten Längsachse L ausgebildet. An einem vertikal oberen Ende ist der Mischer 27 mit dem Basisabschnitt 28 verbunden. Vertikal nach unten schließt der Basisabschnitt 28 mit einer nach unten weisenden Stirnfläche 29 ab.

Mit dem Basisabschnitt 28 ist ein Kopfabschnitt 30 axial verschiebbar verbunden. Vertikal nach unten weisend sind an dem Kopfabschnitt 30 die erste Austrittsöffnung 18 in Form einer Ringdüse und die zweite Austrittsöffnung 22 ebenfalls in Form einer Ringdüse angeordnet, so dass der Vorformling vertikal nach unten aus dem Kopfabschnitt 30 extrudiert und geformt werden kann.

Der Kopfabschnitt 30 ist in Längsrichtung von einem Durchbruch mit einer Innenumfangsfläche 31 durchdrungen. Am Basisabschnitt 28 ist eine zentrale Pinole 32 befestigt, die sich axial erstreckt und über die Stirnfläche 29 vorsteht und in ihrem Verlauf den Kopfabschnitt 30 durchdringt und vertikal unten aus dem Kopfabschnitt 30 vorsteht. An dem Basisabschnitt 28 ist ferner ein Pinolenrohr 34 befestigt, welches koaxial zur Pinole 32 angeordnet ist und diese in sich aufnimmt. Die Pinole 32 weist eine Außenumfangsfläche 33 auf, welche zusammen mit einer Innenumfangsfläche 35 des Pinolenrohres 34 den dritten Fließkanal 25, also den inneren Fließkanal bildet. Zur radialen Abstützung weist die Pinole 32 radial vorstehende Stege 36 auf, die sich innen gegen die Innenumfangsfläche 35 des Pinolenrohres 34 abstützen. Die Stege 36 sind über den Umfang des Pinolenrohres 34 verteilt angeordnet und bilden zwischeneinander Durchtrittskanäle, so dass der dritte Fließkanal 25 ununterbrochen ist.

Das Pinolenrohr 34 ragt über die Stirnfläche 29 vor und in den Durchbruch des Kopfabschnitts 30 hinein. Hierbei endet das Pinolenrohr 34 vertikal vor bzw. über der Pinole 32. Das untere Ende des Pinolenrohres 34 bildet zusammen mit der Pinole 32 die ringförmige dritte Austrittsöffnung 26.

An dem Basiselement 28 ist ferner ein rohrförmiger Stutzen 37 befestigt, der koaxial zur Pinole 32 und zum Pinolenrohr 34 angeordnet ist und das Pinolenrohr 34 in sich aufnimmt. Zwischen einer Innenumfangsfläche 38 des Stutzens 37 und einer Außenumfangsfläche 39 des Pinolenrohres 34 ist ein Teil des zweiten Fließkanals 21, also des mittleren Fließkanals, gebildet. Der Stutzen 37 ragt über die Stirnfläche 29 vor und endet innerhalb des ersten Verteilers 15.

An dem ersten Verteiler 15 ist ein Schieberohr 40 befestigt, welches mit einer Innenumfangsfläche 41 auf einer Außenumfangsfläche 45 des Stutzens 37 sitzt. Der zweite Fließkanal 21 wird somit im weiteren vertikal nach unten gerichteten Verlauf von der Innenumfangsfläche 41 des Schieberohrs 40 und der Außenumfangsfläche 39 des Pinolenrohres 34 gebildet. Ab der dritten Austrittsöffnung 26 wird der zweite Fließkanal 21 von der Innenumfangsfläche 41 des Schieberohrs 40 und der Außenumfangsfläche 33 der Pinole 32 gebildet, bis der zweite Fließkanal 21 die zweite Austrittsöffnung 22 erreicht. In der in Figur 2 dargestellten Position ist das Schieberohr 40 an seinem unteren Ende in Kontakt mit dem unteren Ende der Pinole 32 und verschließt somit den zweiten Fließkanal 21.

An dem ersten Verteiler 15 ist ferner ein nach unten weisender Stutzen 42 vorgesehen. Eine Innenfläche 44 des Stutzens 42 bildet zusammen mit einer Außenumfangsfläche 46 des Schieberohres 40 einen Teil des ersten Fließkanals 17. Der Stutzen 42 ragt bis in den Kopfabschnitt 30 hinein. Im weiteren Verlauf vertikal nach unten wird der erste Fließkanal 17 durch die Innenumfangsfläche 31 des Kopfabschnitts 30 und der Außenumfangsfläche 46 des Schieberohrs 40 gebildet. An einem vertikal unteren Ende des Kopfabschnitts 30 ist das Schieberohr 40 mit seiner Außenumfangsfläche 46 in Kontakt zum Kopfabschnitt 30 und verschließt den ersten Fließkanal 17.

Zum Öffnen des ersten Fließkanals 17 und des zweiten Fließkanals 21 ist der erste Verteiler 15 vertikal entlang der Längsachse L verschiebbar angeordnet und kann aus der in Figur 2 dargestellten Position in eine vertikal nach oben verschobene Position bewegt werden. Hierbei bewegt sich zusammen mit dem ersten Verteiler 15 das Schieberohr 40, so dass das Schieberohr 40 zum einen am unteren Ende des Kopfabschnitts 30 von der Innenumfangsfläche 31 abhebt. Zum anderen hebt das Schieberohr 40 am unteren Ende von der Außenumfangsfläche 33 der Pinole 32 ab und öffnet den zweiten Fließkanal 21. Somit kann aus dem ersten Fließkanal 17 und dem zweiten Fließkanal 21 extrudiertes Material aus der ersten Austrittsöffnung 18 und der zweiten Austrittsöffnung 22 austreten. Um die Verschiebung zu gewährleisten, sitzt das Schieberohr 40 mit seiner Innenumfangsfläche 41 verschiebbar auf der Außenumfangsfläche 45 des Stutzens 37 des Basisabschnitts 28. Ferner taucht der Stutzen 42 des ersten Verteilers 15 axial verschiebbar in die Innenumfangsfläche 31 des Kopfabschnitts 30 ein.

Ferner ist der Kopfabschnitt 30 separat axial verschiebbar, so dass die erste Austrittsöffnung 18 durch axiales Anheben der Kopfabschnitts 30 geöffnet werden, ohne gleichzeitig die zweite Austrittsöffnung 22 zu öffnen. Ferner können der erste Verteiler 15 und der Kopfabschnitt 30 synchron angehoben werden, so dass die erste Austrittsöffnung 18 geschlossen bleibt und nur die zweite Austrittsöffnung 22 geöffnet wird.

Der Mischer 27 umfasst ein Mischergehäuse 50 mit einer Bohrung 52, wobei innerhalb der Bohrung 52 ein Mischelement 47 drehbar angeordnet ist. Das Mischelement 47 ist wellenförmig gestaltet und wird vom Servomotor 10 angetrieben. Das Mischelement 47 weist eine Außenumfangsfläche 49 auf, an der radial nach außen vorstehende Mischblätter 48 vorgesehen sind. Das Mischergehäuse 50 weist eine durch die Bohrung 52 gebildete Innenumfangsfläche 51 auf, an welcher radial nach innen vorstehende Mischblätter 53 vorgesehen sind, die mit den Mischblättern 48 des Mischergehäuses 50 kämmen bzw. zusammenwirken. Durch drehendes Antreiben des Mischelements 47 werden die Mischblätter 48 des Mischelements 47 relativ zu den feststehenden Mischblättern 53 des Mischergehäuses 50 bewegt, so dass ein Durchmischen des extrudierten thermoplastischen Kunststoffs innerhalb des dritten Fließkanals 21 bewirkt wird. An einem vertikal oberen Ende des Mischers 27 ist ein Anschluss 54 für Treibgas vorgesehen, so dass ein Treibgas in den Mischer 27 eingeleitet werden kann und durch die Mischblätter 48, 53 im plastifizierten thermoplastischen Material vermengt wird.

Die Innenumfangsfläche 51 des Mischergehäuses 50 bildet zusammen mit der Außenumfangsfläche 49 des Mischelements 47 einen ringförmigen bzw. schlauchförmigen Kanalabschnitt 55 des zweiten Fließkanals 21. Der ringförmige Kanalabschnitt 55 geht im vertikal nach unten gerichteten Verlauf in einen bohrungsförmigen Kanalabschnitt 56 über. Hierzu endet das Mischelement 47, wobei sich das Mischelement 47 konisch nach unten zu einer Spitze hin verjüngt. Der Basisabschnitt 28 des Extrusionskopfs 1 weist im weiteren Verlauf des zweiten Fließkanals 21 eine Spitze 57 auf, die sich konisch erweitert und den Materialfluss wieder ringförmig bzw. schlauchförmig aufweitet.

Mit dem Extrusionskopf 1 gemäß der ersten Ausführungsform kann somit zum einen ein dreischichtiger Formling hergestellt werden, der eine ungeschäumte äußere erste Schicht, eine ungeschäumte innere dritte Schicht und eine geschäumte zweite Schicht zwischen der äußeren ersten Schicht und der inneren dritten Schicht aufweist. Zum Herstellen eines solchen Formlings sind sowohl die erste Austrittsöffnung 18 als auch die zweite Austrittsöffnung 22 geöffnet. Die dritte Austrittsöffnung 26 lässt sich nicht verschließen, wobei stromab der dritten Austrittsöffnung 26 der dritte Fließkanal 25 und der zweite Fließkanal 21 zusammengeführt sind, so dass die zweite Schicht und die dritte Schicht gemeinsam durch die zweite Austrittsöffnung 22, sofern diese geöffnet ist, austreten.

Wenn ein Teil des Formlings Bereiche ohne geschäumte Schicht aufweisen soll, wird die zweite Austrittsöffnung 22 geschlossen, so dass insgesamt nur eine Schicht, nämlich die ungeschäumte äußere erste Schicht austritt.

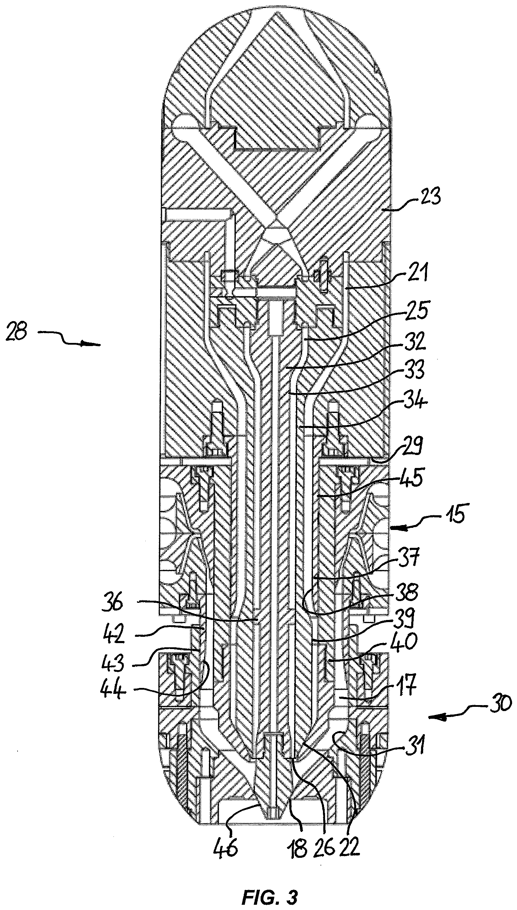

Figur 3 zeigt eine zweite Ausführungsform eines Extrusionskopfes 1, wobei Bauteile, die mit Bauteilen der ersten Ausführungsform übereinstimmen, mit denselben Bezugszeichen versehen sind und im Zusammenhang mit der ersten Ausführungsform beschrieben sind.

Im Unterschied zur ersten Ausführungsform befindet sich bei der zweiten Ausführungsform die erste Austrittsöffnung 18 stromab der zweiten Austrittsöffnung 22. Die zweite Austrittsöffnung 22 ist verschließbar und verschließt ausschließlich den zweiten Fließkanal 21. Stromab der zweiten Austrittsöffnung 22 strömen der erste Fließkanal 17 und der dritte Fließkanal 25 können zusammen von der verschließbaren ersten Austrittsöffnung 22 abgesperrt werden. Bei geöffneter zweiter Austrittsöffnung 22 wird der zweite Fließkanal 21 zusätzlich zu den ersten Fließkanal 17 und dem dritten Fließkanal 25 zusammengeführt, die dann gemeinsam von der ersten Austrittsöffnung 18 absperrbar sind.

Bei geöffneter ersten Austrittsöffnung 18 und geöffneter zweiten Austrittsöffnung 22 wird somit ein Formling mit einer ungeschäumten äußeren ersten Schicht, einer ungeschäumten inneren dritten Schicht und einer dazwischen angeordneten geschäumten zweiten Schicht gebildet.

Wird nun die zweiter Austrittsöffnung 22 verschlossen, entsteht ein zweischichtiger Formling mit einer ungeschäumten äußeren ersten Schicht und einer ungeschäumten inneren dritten Schicht.

### Bezugszeichenliste

- 1: Extrusionskopf
- 2: Anschluss
- 3: zweiter Extruder
- 4: dritter Extruder
- 5: erster Zwischenspeicher
- 6: zweiter Zwischenspeicher
- 7: dritter Zwischenspeicher
- 8: Anschluss
- 9: Anschluss
- 10: Servomotor
- 11: Fülltrichter
- 12: Fülltrichter
- 13: Antriebsmotor
- 14: Antriebsmotor
- 15: erster Verteiler
- 16: erste Zuleitung
- 17: erster Fließkanal
- 18: erste Austrittsöffnung
- 19: zweiter Verteiler
- 20: zweite Zuleitung
- 21: zweiter Fließkanal
- 22: zweite Austrittsöffnung
- 23: dritter Verteiler
- 24: dritte Zuleitung
- 25: dritter Fließkanal
- 26: dritte Austrittsöffnung
- 27: Mischer
- 28: Basisabschnitt
- 29: Stirnfläche
- 30: Kopfabschnitt
- 31: Innenumfangsfläche
- 32: Pinole
- 33: Außenumfangsfläche (der Pinole)
- 34: Pinolenrohr
- 35: Innenumfangsfläche (des Pinolenrohres)
- 36: Steg
- 37: Stutzen
- 38: Innenumfangsfläche (des Stutzens)
- 39: Außenumfangsfläche (des Pinolenrohres)
- 40: Schieberohr
- 41: Innenumfangsfläche (des Schieberohrs)
- 42: Stutzen
- 43: Außenumfangsfläche (des Stutzens des ersten Verteilers)
- 44: Innenumfangsfläche (des Stutzens des ersten Verteilers)
- 45: Außenumfangsfläche (des Stutzens des Basisabschnitts)
- 46: Außenumfangsfläche (des Schieberrohrs)
- 47: Mischelement
- 48: Mischblatt
- 49: Außenumfangsfläche (des Mischelements)
- 50: Mischergehäuse
- 51: Innenumfangsfläche (des Mischergehäuses)
- 52: Bohrung
- 53: Mischblatt
- 54: Anschluss für Treibgas
- 55: ringförmiger Kanalabschnitt
- 56: bohrungsförmiger Kanalabschnitt
- 57: Spitze

- L: Längsachse

## Patentansprüche

1. Extrusionskopf (1) zur Herstellung von schlauchförmigen Vorformlingen aus extrudierbarem Kunststoff, die aus mindestens einer ersten Schicht und einer zweiten Schicht aufgebaut sind, wobei der Extrusionskopf (1) folgendes umfasst:
einen ersten Verteiler (15) mit einem Anschluss (2) für einen ersten Extruder,
einen zweiten Verteiler (19) mit einem Anschluss (8) für einen zweiten Extruder (3),
einen ersten Fließkanal (17) mit einer ringförmigen ersten Austrittsöffnung (18) zur Erzeugung der ersten Schicht, wobei der erste Fließkanal (17) vom ersten Verteiler (15) gespeist wird, und
einen zweiten Fließkanal (21) mit einer ringförmigen zweiten Austrittsöffnung (22) zur Erzeugung der zweiten Schicht, wobei der zweite Fließkanal (21) vom zweiten Verteiler (19) gespeist wird,
**dadurch gekennzeichnet,**
**dass** der Extrusionskopf (1) ferner einen Mischer (27) innerhalb des zweiten Fließkanals (21) mit einem Anschluss (54) zum Einleiten eines Treibgases aufweist,
**dass** der Mischer (27) ein Mischergehäuses (50) mit einer Bohrung (52), innerhalb derer ein wellenförmiges Mischelement um eine Längsachse (L) des Extrusionskopfes (1) drehbar angeordnet ist, aufweist, wobei zwischen der Bohrung (52) des Mischergehäuses (50) und dem Mischelement (47) ein ringförmiger Kanalabschnitt (55) gebildet ist, der Teil des zweiten Fließkanals (21) ist, und
**dass** stromab vom Mischer (27) ein bohrungsförmiger Kanalabschnitt (56) des zweiten Fließkanals (21) vorgesehen ist, wobei der Materialfluss aus dem ringförmigen Kanalabschnitt (55) des Mischers (27) in dem bohrungsförmigen Kanalabschnitt (56) zusammengeführt wird.

2. Extrusionskopf nach Anspruch 1,
**dadurch gekennzeichnet,**
**dass** an einer Außenumfangsfläche (49) des Mischelements (47) Mischblätter (48) angeordnet sind und
**dass** an einer Innenumfangsfläche (51) des Mischergehäuses (50) Mischblätter (53) vorgesehen sind, die mit den Mischblättern (48) des Mischelements (47) zusammenwirken.

3. Extrusionskopf nach einem der vorangehenden Ansprüche,
**dadurch gekennzeichnet,**
**dass** der Anschluss (54) zum Einleiten eines Treibgases am Mischergehäuse (50) vorgesehen ist, wobei eine Treibgasleitung in den ringförmigen Kanalabschnitt (55) führt.

4. Extrusionskopf nach einem der vorangehenden Ansprüche,
**dadurch gekennzeichnet,**
**dass** ein Servomotor (10) zum Antreiben des Mischers (27) mit variabler Drehzahl vorgesehen ist.

5. Extrusionskopf nach einem der vorangehenden Ansprüche,
**dadurch gekennzeichnet,**
**dass** die Querschnittsfläche des zweiten Fließkanals (21) vom Mischer (27) zur zweiten Austrittsöffnung (22) kontinuierlich geringer wird.

6. Extrusionskopf nach einem der vorangehenden Ansprüche,
**dadurch gekennzeichnet,**
**dass** stromauf vom Mischer (27) ein Absperrventil vorgesehen ist und dass die zweite Austrittsöffnung (22) verschließbar ist.

7. Extrusionskopf nach einem der vorangehenden Ansprüche,
**dadurch gekennzeichnet,**
**dass** die zweite Austrittsöffnung (22) derart angeordnet ist, dass die zweite Schicht innerhalb der ersten Schicht angeordnet ist.

8. Extrusionskopf nach einem der vorangehenden Ansprüche,
**dadurch gekennzeichnet,**
**dass** ein dritter Verteiler (23) mit einem Anschluss (9) für einen dritten Extruder (4) vorgesehen ist und
**dass** ein dritter Fließkanal (25) mit einer ringförmigen dritten Austrittsöffnung (26) zur Erzeugung einer dritten Schicht vorgesehen ist, wobei der dritte Fließkanal (25) vom dritten Verteiler (23) gespeist wird.

9. Extrusionskopf nach Anspruch 8,
**dadurch gekennzeichnet,**
**dass** die dritte Austrittsöffnung (26) derart angeordnet ist, dass die dritte Schicht innerhalb der zweiten Schicht angeordnet ist.

10. Extrusionsanlage mit einem Extrusionskopf (1) nach einem der vorangehenden Ansprüche, wobei vor jedem Verteiler (15, 19, 23) ein Zwischenspeicher (5, 6, 7) für Extrudat vorgesehen ist.

11. Verfahren zum Betreiben eines Extrusionskopfes (1) oder einer Extrusionsanlage nach einem der vorangehenden Ansprüche,
**dadurch gekennzeichnet,**
**dass** bei Unterschreiten eines vorbestimmten Drucks innerhalb des zweiten Fließkanals (21) der Druck durch Anpassen der Ausstoßgeschwindigkeit eines dem Extrusionskopf (1) vorgeschalteten zweiten Zwischenspeichers (6) für Extrudat derart reguliert wird, dass der Druck innerhalb des zweiten Fließkanals (21) auf einem definierten Wert gehalten wird.

12. Verfahren nach Anspruch 11,
**dadurch gekennzeichnet,**
**dass** die Temperatur innerhalb des zweiten Fließkanals (21) auf einen anderen Wert eingestellt wird als innerhalb der übrigen Fließkanäle (17, 25).

## Claims

1. Extrusion head (1) for producing tubular preforms of extrudable plastic material, which are composed of at least a first layer and a second layer, the extrusion head (1) comprising:
a first manifold (15) with a connection (2) for a first extruder,
a second manifold (19) with a connection (8) for a second extruder (3),
a first flow channel (17) with an annular first outlet opening (18) for producing the first layer, the first flow channel (17) being fed by the first manifold (15), and
a second flow channel (21) with an annular second outlet opening (22) for producing the second layer, the second flow channel (21) being fed by the second manifold (19),
**characterized in**
**that** the extrusion head (1) further comprises a mixer (27) within the second flow channel (21) with a connection (54) for introducing a foaming gas,
**that** the mixer (27) comprises a mixer housing (50) with a bore (52), within which a shaft-shaped mixing element is arranged rotatably about a longitudinal axis (L) of the extrusion head (1), wherein between the bore (52) of the mixer housing (50) and the mixing element (47) an annular channel section (55) is formed, which is part of the second flow channel (21), and
**that** a bore-shaped channel section (56) of the second flow channel (21) is provided downstream of the mixer (27), the material flow from the annular channel section (55) of the mixer (27) being brought together in the bore-shaped channel section (56).

2. Extrusion head according to claim 1,
**characterized in**
**that** mixing blades (48) are arranged on an outer circumferential surface (49) of the mixing element (47), and
**that** mixing blades (53) are provided on an inner circumferential surface (51) of the mixer housing (50) and interact with the mixing blades (48) of the mixing element (47).

3. Extrusion head according to one of the preceding claims,
**characterized in**
**that** the connection (54) for introducing a foaming gas is provided on the mixer housing (50), a foaming gas line leading into the annular channel section (55).

4. Extrusion head according to one of the preceding claims,
**characterized in**
**that** a servomotor (10) is provided for driving the mixer (27) at variable speed.

5. Extrusion head according to one of the preceding claims,
**characterized in**
**that** the cross-sectional area of the second flow channel (21) from the mixer (27) to the second outlet opening (22) becomes continuously smaller.

6. Extrusion head according to one of the preceding claims,
**characterized in**
**that** a shut-off valve is provided upstream of the mixer (27) and
**that** the second outlet opening (22) can be closed.

7. Extrusion head according to one of the preceding claims,
**characterized in**
**that** the second outlet opening (22) is arranged in such a way that the second layer is arranged inside the first layer.

8. Extrusion head according to one of the preceding claims,
**characterized in**
**that** a third manifold (23) with a connection (9) for a third extruder (4) is provided,
**that** a third flow channel (25) with an annular third outlet opening (26) is provided for producing a third layer, the third flow channel (25) being fed by the third manifold (23).

9. Extrusion head according to claim 8,
**characterized in**
**that** the third outlet opening (26) is arranged in such a way that the third layer is arranged inside the second layer.

10. Extrusion machine with an extrusion head (1) according to one of the preceding claims, wherein an temporary storage (5, 6, 7) for extruded material is provided before each manifold (15, 19, 23).

11. Method of operating an extrusion head (1) or an extrusion machine according to any of the foregoing claims,
**characterized in**
**that**, if the pressure within the second flow channel (21) falls below a predetermined pressure, the pressure is regulated by adjusting the ejection speed of a second temporary storage (6) for extruded material, which is connected upstream of the extrusion head (1), in such a way that the pressure within the second flow channel (21) is kept at a defined value.

12. Method according to claim 11,
**characterized in**
**that** the temperature within the second flow channel (21) is set to a different value than within the other flow channels (17, 25).

## Revendications

1. Tête de tube d'extrusion (1) pour la fabrication de préformes en forme de tube à partir de matière plastique extrudable, qui sont constituées à partir d'au moins une première couche et une deuxième couche, sachant que la tête de tube d'extrusion (1) comprend les éléments suivants :
un premier distributeur (15) avec un raccord (2) pour une première extrudeuse, un deuxième distributeur (19) avec un raccord (8) pour une deuxième extrudeuse (3),
un premier conduit d'écoulement (17) avec une première ouverture de sortie de forme annulaire (18) pour produire la première couche, sachant que le premier conduit d'écoulement (17) est alimenté par le premier distributeur (15) et
un deuxième conduit d'écoulement (21) avec une deuxième ouverture de sortie de forme annulaire (22) pour produire la deuxième couche, sachant que le deuxième conduit d'écoulement (21) est alimenté par le deuxième distributeur (19),
**caractérisée en ce que**
la tête de tube d'extrusion (1) comporte en plus un mélangeur (27) à l'intérieur du deuxième conduit d'écoulement (21) avec un raccord (54) pour introduire un gaz propulseur,
**en ce que** le mélangeur (27) comporte un boîtier de mélangeur (50) avec un perçage (52) à l'intérieur duquel est disposé un élément de mélange en forme d'arbre pouvant tourner autour d'un axe longitudinal (L) de la tête de tube d'extrusion (1), sachant qu'une section de conduit de forme annulaire (55), qui fait partie du deuxième conduit d'écoulement (21), est formée entre le perçage (52) du boîtier de mélangeur (50) et l'élément de mélange (47), et
**en ce qu'**une section de conduit en forme de perçage (56) du deuxième conduit d'écoulement (21) est prévue en aval du mélangeur (27), sachant que l'écoulement de matière de la section de conduit de forme annulaire (55) du mélangeur (27) est concentré dans la section de conduit en forme de perçage (56).

2. Tête de tube d'extrusion selon la revendication 1, **caractérisée en ce que**
des pales de mélange (48) sont disposées sur une surface périphérique extérieure (49) de l'élément de mélange (47) et
**en ce que** des pales de mélange (53) sont prévues sur une surface périphérique intérieure (51) du boîtier de mélangeur (50), qui coopèrent avec les pales de mélange (48) de l'élément de mélange (47).

3. Tête de tube d'extrusion selon l'une quelconque des revendications précédentes,
**caractérisée en ce que**
le raccord (54) est prévu sur le boîtier de mélangeur (50) pour introduire un gaz propulseur, sachant qu'une conduite de gaz propulseur mène dans la section de conduit de forme annulaire (55).

4. Tête de tube d'extrusion selon l'une quelconque des revendications précédentes,
**caractérisée en ce qu'**
un servomoteur (10) est prévu pour entraîner le mélangeur (27) à un régime variable.

5. Tête de tube d'extrusion selon l'une quelconque des revendications précédentes,
**caractérisée en ce que**
la surface de section du deuxième conduit d'écoulement (21) est, du mélangeur (27) à la deuxième ouverture de sortie (22), de façon continue plus faible.

6. Tête de tube d'extrusion selon l'une quelconque des revendications précédentes,
**caractérisée en ce qu'**
une vanne d'arrêt est prévue en amont du mélangeur (27) et **en ce que** la deuxième ouverture de sortie (22) peut être fermée.

7. Tête de tube d'extrusion selon l'une quelconque des revendications précédentes,
**caractérisée en ce que**
la deuxième ouverture de sortie (22) est disposée de telle manière que la deuxième couche est disposée à l'intérieur de la première couche.

8. Tête de tube d'extrusion selon l'une quelconque des revendications précédentes,
**caractérisée en ce qu'**
un troisième distributeur (23) est prévu avec un raccord (9) pour une troisième extrudeuse (4) et
**en ce qu'**un troisième conduit d'écoulement (25) avec une troisième ouverture de sortie de forme annulaire (26) est prévu pour produire une troisième couche, sachant que le troisième conduit d'écoulement (25) est alimenté par le troisième distributeur (23).

9. Tête de tube d'extrusion selon la revendication 8, **caractérisée en ce que**
la troisième ouverture de sortie (26) est disposée de telle manière que la troisième couche est disposée à l'intérieur de la deuxième couche.

10. Installation d'extrusion avec une tête de tube d'extrusion (1) selon l'une quelconque des revendications précédentes, sachant qu'un réservoir intermédiaire (5, 6, 7) pour extrudat est prévu avant chaque distributeur (15, 19, 23).

11. Procédé destiné à faire fonctionner une tête de tube d'extrusion (1) ou une installation d'extrusion selon l'une quelconque des revendications précédentes, **caractérisé en ce que**
lors d'une dépassement d'une pression prédéterminée à l'intérieur du deuxième conduit d'écoulement (21), la pression par adaptation de la vitesse d'expulsion d'un deuxième réservoir intermédiaire (6) pour extrudat monté en amont de la tête de tube d'extrusion (1) est réglée de telle manière que la pression à l'intérieur du deuxième conduit d'écoulement (21) est maintenue à une valeur définie.

12. Procédé selon la revendication 11,
**caractérisé en ce que**
la température à l'intérieur du deuxième conduit d'écoulement (21) est réglée sur une autre valeur qu'à l'intérieur des autres conduits d'écoulement (17, 25).
